Europäisches Patentamt

(19) European Patent Office

Office européen des brevets

(11) Veröffentlichungsnummer: **0 096 443**
**B1**

(12) # EUROPÄISCHE PATENTSCHRIFT

(45) Veröffentlichungstag der Patentschrift:
09.04.86

(51) Int. Cl.⁴: **H 02 K 7/108**

(21) Anmeldenummer: 83200779.3

(22) Anmeldetag: 02.06.83

(54) Schrittmotor.

(30) Priorität: 09.06.82 DE 3221792

(43) Veröffentlichungstag der Anmeldung:
21.12.83 Patentblatt 83/51

(45) Bekanntmachung des Hinweises auf die Patenterteilung:
09.04.86 Patentblatt 86/15

(84) Benannte Vertragsstaaten:
CH DE FR GB LI

(56) Entgegenhaltungen:
DE - A - 2 915 171
DE - C - 586 814
FR - A - 2 079 907
FR - A - 2 085 001
FR - A - 2 425 750
GB - A - 2 097 197
US - A - 2 643 614
US - A - 4 107 559

(73) Patentinhaber: Philips Patentverwaltung GmbH,
Bilstrasse 80, D-2000 Hamburg 28 (DE)
(84) Benannte Vertragsstaaten: DE

(73) Patentinhaber: N.V. Philips' Gloeilampenfabrieken,
Groenewoudseweg 1, NL-5621 BA Eindhoven (NL)
(84) Benannte Vertragsstaaten: CH FR GB LI

(72) Erfinder: Adami, Hans-Jürgen, Goldmariekenweg 45,
D-2000 Hamburg 61 (DE)

(74) Vertreter: Kupfermann, Fritz-Joachim et al, Philips
Patentverwaltung GmbH
Bilstrasse 80 Postfach 10 51 49,
D-2000 Hamburg 28 (DE)

LIBER, STOCKHOLM 1986

## Beschreibung

Die Erfindung bezieht sich auf einen Aktuatorschrittmotor mit einem Läufer, der aus der Läuferwelle und einer Läufermagnethülse gebildet ist, wobei die Läufermagnethülse die hohle, mit einem Innenschneckengewinde versehene Läuferwelle umschließt und eine durch die Läuferwelle hindurchgeführte Gewindespindel axial in der Läuferwelle verschiebbar ist, mit einer aus Anschlägen bestehenden Vorrichtung zur Positionierung der Gewindespindel.

Ein derartiger Schrittmotor zur Ausübung von Linearbewegungen ist aus der US-PS 41 07 559 bekannt. Bei ihm ist die hohl ausgebildete Läuferwelle mit einem Innenschneckengewinde versehen, in dem wiederum eine Gewindespindel geführt ist. Beim Drehen der Läuferwelle wird die Gewindespindel dann axial hin und her geschoben zwischen an der Gewindespindel vorgesehenen Endanschlägen.

Schrittmotoren müssen allgemein von einer bestimmten Anfangsposition aus starten. Diese Anfangsposition wird mit externen Mitteln, wie Lichtschaltern, Lichtschranken oder Magnetindikatoren erkannt und ausgewertet.

Bei Schrittmotoren mit Linearbewegung versagen diese Meßmethoden, weil die eingesetzten Indikationsmaßnahmen für Wegänderungen pro Schritt in der Größenordnung von 0,05 mm nicht ausreichen. Die Anfangsposition ist deshalb bei kleinen Wegänderungen nicht einstellbar.

Werden Schrittmotoren als Aktuatoren eingesetzt, dann macht sich ein weiterer Nachteil bemerkbar. Die Schrittmotoren können nämlich nicht gegen einen mechanischen Anschlag auflaufen. Wird dies von ihnen verlangt, dann eigt es sich, daß der Rotor beispielsweise evtl. nun zwei Schritte vom mechanischen Anschlag zurückspringt, womit die Läuferposition nicht gleich der Anschlagposition ist und die Anfangsposition beim neuen Anlauf nicht richtig vorgegeben ist.

Diese Eigenarten von Schrittmotoren haben es bisher nicht möglich gemacht, sie als Aktuatoren einzusetzen, die auf einen bestimmten Anschlag auflaufen müssen und die von diesem Anschlag aus genaue Schritte vollführen können.

Es ist Aufgabe der Erfindung, einen Aktuatorschrittmotor zu schaffen, der ein exaktes Positionieren der Aktuatorgewindespindel ermöglicht.

Die gestellte Aufgabe ist erfindungsgemäß dadurch gelöst, daß die Vorrichtung eine Rutschkupplung aufweist, deren Kupplungsbelag zwischen Läuferwelle und der Läufermagnethülse angeordnet ist.

Durch das Zwischenschalten der Rutschkupplung zwischen die Läufermagnethülse und die Läuferwelle wird es möglich, daß der Läufermagnet weiterdreht während die Läuferwelle an der Anschlags- und Ausgangsposition stehen bleibt. Von dieser Anschlags- und Ausgangsposition aus kann dann der Läufer in exakt vorgegebenen Schritten starten.

An sich ist es aus der DE-AS 29 15 171 und aus der FR-AS 24 25 750 bekannt, zwischen einer Läuferwelle und dem Läufer eines Motors eine Rutschkupplung vorzusehen. Die Rutschkupplung soll aber bei der DE-AS 29 15 171 ein Zappeln des Motors bei einer Blockierung des Abtriebes verhindern. Das gleiche Problem liegt auch bei der FR-AS 24 25 750 vor, wobei mit Hilfe des Motors ein Bandzug bei einem Bandgerät aufrecht erhalten werden soll. Als Aktuatoren, die aus einer bestimmten Stellung heraus anlaufen sollen, sind derartige Synchronmotoren nicht einsetzbar.

Nach einer weiteren Ausgestaltung der Erfindung ist vorgesehen, daß auf der Innenwand der Läufermagnethülse eine Kupplungshülse angeordnet ist. Mit Hilfe dieser Kupplungshülse wird der Läufermagnet gegenüber der Läuferwelle mit einem verschleißfesten Teil versehen.

Nach einer weiteren Ausgestaltung der Erfindung ist vorgesehen, daß der Kupplungsbelag aus einem filzartigen Material besteht. Ebensogut ist es aber auch möglich, daß der Kupplungsbelag aus einem haftfähigen Fettschicht besteht. Das haftfähige Fett kann dabei beispielsweise aus hochviskosen Grundölen bestehen.

Um sicherzustellen, daß die Läufermagnethülse auch tatsächlich gegenüber der Läuferwelle ausreichend verdrehbar ist, muß das Drehmoment der Rutschkupplung derart eingestellt sein, daß es etwas schwächer ist als das maximale Motordrehmoment. Die Verschleißbelastung der Rutschkupplung kann vernachlässigt werden, da die Rutschkupplung nur kurz vor dem Ausschalten und kurz nach dem Einschalten des Motors benutzt wird. Während der übrigen Laufzeiten sind Läuferwelle und Läufermagnethülse praktisch fest miteinander verbunden.

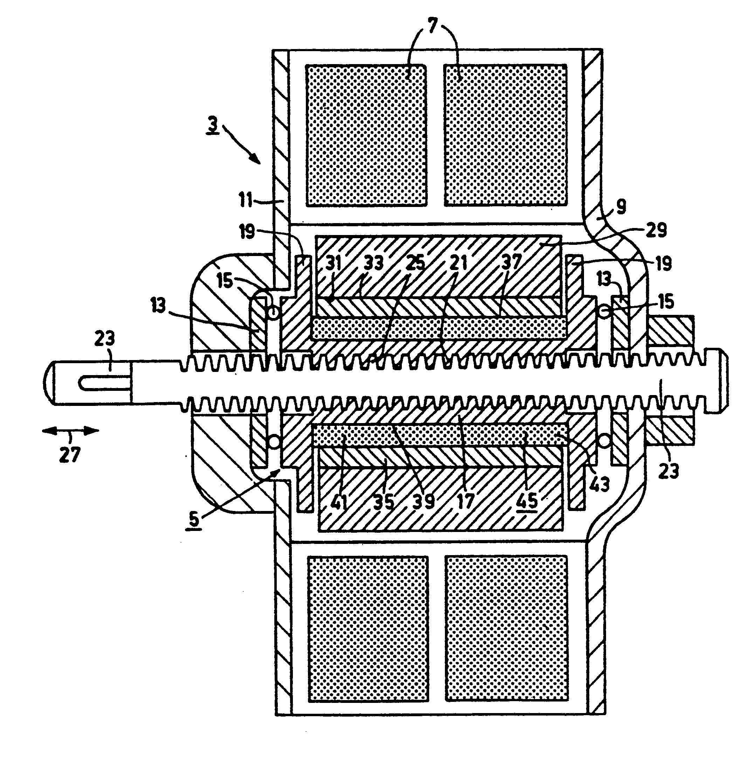

Die Erfindung wird anhand des in der Zeichnung dargestellten Ausführungsbeispieles näher erläutert, das einen Schrittmotor mit Linearbewegung zeigt. Die Erfindung ist aber in gleicher Weise für Schrittmotoren mit Rotationsbewegung geeignet. Der Schneckentrieb ist dabei ersetzt durch eine einstückige Welle.

Die Zeichnung zeigt einen Schrittmotor mit einem schematisch im Schnitt dargestellten Ständer 3 und Läufer 5. Der Ständer 3 besteht aus den Ständerspulen 7 und den die Spulen axial abdeckenden Lagerschilden 9 und 11. An den Lagerschilden 9 und 11 ist die Läuferwelle über Lagerplatten 13 und Kugellager 15 drehbar gelagert.

Die Kugellager 15 lagern die als Läuferbuchse 17 ausgebildete Läuferwelle, die mit Flanschscheiben 19 versehen ist. Die Läuferbuchse 17 ist mit einem Innenschneckengewinde 21 versehen.

In dem Innenschneckengewinde 21 der Läuferbuchse 17 ist eine Gewindespindel 23 geführt, deren Gewinde 25 mit dem Innenschneckengewinde der Läuferbuchse 17 kämmt. Beim Drehen des Läufers 5 und damit der Läuferbuchse 17 wird die Gewindespindel 23 in Richtung des Doppelpfeiles 27 entsprechend der Drehrichtung des Läufers 5 hin und her geschoben. Das Hin- und Herschieben erfolgt schrittweise nach Maßgabe des sich schrittweise drehenden Läufers 5, weil der Motor als Schrittmotor ausgelegt ist.

Zum Läufer 5 gehört eine Läufermagnethülse 29 mit Dauermagnaten, an deren Innenwandung 31 die Außenwand 33 einer Kupplungshülse 35 anliegt. Kupplungshülse 35 und Läufermagnethülse sind fest miteinander verbunden. Die Läufermagnethülse ist entsprechend der Auslegung des Motors magnetisiert, und die Kupplungshülse kann beispielsweise aus Messing oder Bronze bestehen.

Zwischen der Innenwand 37 der Kupplungshülse 35 und der Außenwand 39 der Läuferbuchse 17 ist ein Kupplungsbelag 41 angeordnet. Dieser Kupplungsbelag kann beispielsweise aus Filz bestehen. Andererseits ist es aber auch möglich, den Spalt 43 zwischen der Innenwand 37 der Kupplungshülse 35 und der Außenwand der Läuferbuchse mit einer haftfähigen Fettschicht zu füllen, die den Spalt 43 ausfüllt. Als Fett eignet sich dabei beispielsweise ein haftfähiges Fett aus hochviskosen Grundölen.

Das Drehmoment der Rutschkupplung 45, die aus dem Kupplungsbelag oder dem Fett 41 sowie der Innenwand der Kupplungsbuchse 35 und der Außenwand der Läuferbuchse 17 gebildet ist, ist derart eingestellt, daß es etwas schwächer ist als das maximale Motordrehmoment. Bei maximalem Motordrehmoment dreht der Läufermagnet also entsprechend der Impulsvorgabe durch die Ständerspulen weiter, auch wenn die Gewindespindel 23 beispielsweise gegen einen Anschlag gestoßen ist und sich nicht weiterbewegen kann. Erst wenn Drehimpulse in Gegenrichtung auf die Stänerspulen gegeben werden, dann schiebt sich die Gewindespindel von dem Anschlag wieder zurück, wobei die Bewegungen vom Anschlag weg genau in die vom Motor vorgegebenen Schrittweglängen unterteilt sind.

Die Rutschkupplung ermöglicht es also, die Gewindespindel eines Aktuators genau auf einen Anschlag auflaufen zu lassen und von diesem an wieder mit vorgegebenen Schritten zu starten. Auf einfache Weise sind damit also Null-Stellungsvorgaben möglich.

**Patentansprüche:**

1. Aktuatorschrittmotor mit einem Läufer, der aus der Läuferwelle und einer Läufermagnethülse gebildet ist, wobei die Läufermagnethülse die hohle, mit einem Innenschneckengewinde versehene Läuferwelle umschließt und eine durch die Läuferwelle hindurchgeführte Gewindespindel axial in der Läuferwelle verschiebbar ist, mit einer aus Anschlägen bestehenden Vorrichtung zur Positionierung der Gewindespindel, dadurch gekennzeichnet, daß die Vorrichtung eine Rutschkupplung aufweist, deren Kupplungsbelag zwischen Läuferwelle und der Läufermagnethülse angeordnet ist.

2. Schrittmotor nach Anspruch 1, dadurch gekennzeichnet, daß auf der Innenwand der Läufermagnethülse eine Kupplungshülse angeordnet ist.

3. Schrittmotor nach den Ansprüchen 2, dadurch gekennzeichnet daß der Kupplungsbelag aus einem filzartigen Material besteht.

4. Schrittmotor nach den Ansprüchen 2, dadurch gekennzeichnet, daß der Kupplungsbelag aus einer haftfähigen Fettschicht besteht.

5. Schrittmotor nach Anspruch 4, dadurch gekennzeichnet, daß das haftfähige Fett aus hochviskosen Grundölen besteht.

6. Schrittmotor nach einem oder mehreren der Ansprüche I bis 5, dadurch gekennzeichnet, daß das Drehmoment der Rutschkupplung derart eingestellt ist, daß es etwas schwächer ist als das maximale Motordrehmoment.

**Claims:**

1. A stepping motor having a rotor, which comprises a hollow rotor shaft and a rotor-magnet sleeve, the rotormagnet sleeve surrounding the rotor shaft, which is provided with internal helical screw thread, and a threaded spindle co-operating with the rotor shaft so as to be axially movable in the rotor shaft, and having a device comprising stops for positioning the threaded spindle, characterized in that the device comprises a slip coupling whose coupling means is arranged between the rotor shaft and the rotormagnet sleeve.

2. A stepping motor as claimed in Claim 1, characterized in that a coupling sleeve is arranged on the inner wall of the rotor-magnet sleeve.

3. A stepping motor as claimed in Claim 2, characterized in that the coupling means comprises a feltlike material.

4. A stepping motor as claimed in Claim 2, characterized in that the coupling means comprises a layer of an adhesive grease.

5. A stepping motor as claimed in Claim 4, characterized in that the adhesive grease is based on highly viscous oils.

6. A stepping motor as claimed in any of the Claims 1 to 5, characterized in that the torque of the slip coupling is adjusted so that it is slightly smaller than the maximum motor torque.

**Revendications**

1. Moteur pas-à-pas faisant fonction d'actionneur et muni d'un rotor constitué par'un arbre de rotor et un manchon magnétique de rotor qui entoure l'arbre de rotor creux muni d'un filet hélicoïdal intérieur, une broche filetée coopérant avec l'arbre de rotor de façon à pouvoir être déplacée axialement dans celui-ci, avec un dispositif constitué par des butées et servant à positionner la broche filetée, caractérisé en ce que le dispositif présente un accouplement à friction dont la garniture est disposée entre l'arbre de rotor et le manchon magnétique de rotor.

2. Moteur pas-à-pas selon la revendication 1, caractérisé en ce qu'un manchon d'accouplement est disposé sur la paroi intérieure du manchon magnétique de rotor.

3. Moteur pas-à-pas selon la revendication 2, caractérisé en ce que la garniture d'accouplement est constituée par un matériau feutré.

4. Moteur pas-à-pas selon la revendication 2, caractérisé en ce que la garniture d'accouplement est constituée par une couche de graisse adhésive.

5. Moteur pas-à-pas selon la revendication 4, caractérisé en ce que la graisse adhésive est constituée par des huiles très visqueuses.

6. Moteur pas-à-pas selon l'une quelconque des revendications 1 à 5, caractérisé en ce que le couple de rotation de l'accouplement à friction est réglé de façon à être légèrement plus faible que le couple moteur maximal.